# EUROPEAN PATENT APPLICATION

(11) **EP 4 560 903 A1**
(43) Date of publication of application: **28.05.2025**
(21) Application number: 24192383.8
(22) Date of filing: 01.08.2024
(51) Int. Cl.: H02M 1/00, H02M 1/42

(54) **CONTROL METHOD, CONTROL APPARATUS, ON-BOARD CHARGER, VEHICLE, MEDIUM AND PRODUCT**

(30) Priority: 21.11.2023 CN 202311562354; 15.03.2024 CN 202410302995
(71) Applicant: Xiaomi EV Technology Co., Ltd., Beijing 100176 (CN)
(72) Inventor: LI, Changan, Beijing 100176 (CN); REN, Xuebei, Beijing 100176 (CN); CHEN, Qu, Beijing 100176 (CN); GUO, Xingkuan, Beijing 100176 (CN); WANG, Yuetian, Beijing 100176 (CN)
(74) Representative: Stöckeler, Ferdinand

(57) **Abstract**

A control method of a converter is provided. The converter is configured to convert an input alternating current signal into a direct current signal to charge a battery, the converter comprises a rectification circuit unit, and the control method includes: generating (S31) a reference carrier signal according to a current voltage value of the battery, a target voltage value of the battery and the alternating current signal, when receiving a charging instruction; generating (S32) a first type of driving signal for controlling the operation of the rectification circuit unit at least according to the reference carrier signal, in which the first type of driving signal is at least configured to control a target power component in the rectification circuit unit to be in a normally off state; and controlling (S33) the operation of the rectification circuit unit by using the first type of driving signal.

## Description

### FIELD

The present invention relates to the field of vehicles, and more particularly to a control method, a control apparatus, an on-board charger, a vehicle, a medium and a product.

### BACKGROUND

An on-board charger (OBC) of an electric vehicle is used to convert an alternating current (AC) into a direct current (DC), so as to charge a power battery of the vehicle. The on-board charger (OBC) has a built-in converter, which is used to convert the alternating current into the direct current. At present, an isolated AC-DC converter usually adopts a two-stage structure, which includes two independent single-stage converters. The first stage converter is a power factor correction AC-DC converter, and the second stage converter is an isolated DC-DC converter. An electrolytic capacitor is connected between the first stage converter and the second stage converter, and is used for energy buffering. However, the AC-DC converter of the two-stage structure has the problem of many components and high hardware cost.

At present, the market and academic community are pushing the AC-DC converter of the two-stage structure to evolve into a single-stage topology structure, so that the AC-DC converter of the single-stage structure can not only omit the electrolytic capacitor, but also reduce the number of power electronic switching components, on the basis of realizing the above functions. Compared with the AC-DC converter of the two-stage structure, the AC-DC converter of the single-stage structure has a smaller volume, a higher efficiency, a lower cost and a significantly longer service life.

### SUMMARY

In order to overcome the problems existing in the related art, the present invention provides a control method, a control apparatus, an on-board charger, a vehicle, a medium and a product.

According to a first aspect of embodiments of the present invention, there is provided a control method of a converter, the converter is configured to convert an input alternating current signal into a direct current signal to charge a battery, the converter includes a rectification circuit unit, and the control method includes: generating a reference carrier signal according to a current voltage value of the battery, a target voltage value of the battery and the alternating current signal, when receiving a charging instruction; generating a first type of driving signal for controlling the operation of the rectification circuit unit at least according to the reference carrier signal, wherein the first type of driving signal is at least configured to control a target power component in the rectification circuit unit to be in a normally off state; and controlling the operation of the rectification circuit unit by using the first type of driving signal.

Optionally, the rectification circuit unit includes a first bridge arm and a second bridge arm, the first bridge arm includes a first power component and a second power component, the second bridge arm includes a third power component and a fourth power component, the first power component is located at an upper bridge arm of the first bridge arm, the second power component is located at a lower bridge arm of the first bridge arm, the third power component is located at an upper bridge arm of the second bridge arm, and the fourth power component is located at a lower bridge arm of the second bridge arm. The target power component includes the first power component and the third power component; or, the target power component includes the second power component and the fourth power component.

Optionally, the first type of driving signal includes a second driving signal for controlling the target power component to be in the normally off state and a first driving signal for controlling the operation of other power components in the rectification circuit unit except the target power component in the rectification circuit unit; and generating the first type of driving signal for controlling the operation of the rectification circuit unit at least according to the reference carrier signal includes: generating the first driving signal for controlling the operation of other power components in the rectification circuit unit except the target power component in the rectification circuit unit according to a duty ratio of the reference carrier signal and a preset driving signal.

Optionally, the other power components in the rectification circuit unit except the target power component in the rectification circuit unit include a first target power component and a second target power component; and generating the first driving signal for controlling the operation of other power components in the rectification circuit unit except the target power component in the rectification circuit unit according to the duty ratio of the reference carrier signal and the preset driving signal includes: generating a reference signal according to the duty ratio of the reference carrier signal and the preset driving signal, in which an amplitude of the reference signal does not change with a phase of the alternating current signal; inputting the reference signal into a positive input end of a first comparator, inputting the reference carrier signal into a negative input end of the first comparator after phase-shifting the reference carrier signal by a preset phase, and obtaining a first sub-driving signal for controlling the operation of the first target power component output by the first comparator; and inputting the first sub-driving signal into a first inverter and obtaining a second sub-driving signal for controlling the operation of the second target power component output by the first inverter.

Optionally, generating the first type of driving signal for controlling the operation of the rectification circuit unit at least according to the reference carrier signal further includes: inputting a preset signal into a positive input end of a second comparator, inputting the reference carrier signal into a negative input end of the second comparator, and obtaining a second driving signal output by the second comparator. The second driving signal is for controlling the target power component to be in the normally off state.

Optionally, the converter includes a high frequency bridge arm, and the control method further includes: according to the reference carrier signal and the reference signal, generating a second type of driving signal for controlling the operation of the high frequency bridge arm, in which the first driving signal is delayed by a preset phase behind the second type of driving signal; and controlling the operation of the high frequency bridge arm by using the second type of driving signal.

Optionally, the high-frequency bridge arm includes a first group of paired diodes and a second group of paired diodes, and the second type of driving signal includes a third sub-driving signal for controlling the operation of the first group of paired diodes and a fourth sub-driving signal for controlling the operation of the second group of paired diodes. Generating the second type of driving signal for controlling the operation of the high frequency bridge arm according to the reference carrier signal and the reference signal includes: inputting the reference carrier signal into a negative input end of a third comparator, inputting the reference signal into a positive input end of the third comparator, and obtaining the third sub-driving signal for controlling the operation of the first group of paired diodes output by the third comparator; and inputting the third sub-driving signal into a second inverter and obtaining the fourth sub-driving signal for controlling the operation of the second group of paired diodes output by the second inverter. In case that the first target power component is the first power component or the fourth power component, the first group of paired diodes includes a fifth power component located at an upper bridge arm of a third bridge arm in the high frequency bridge arm and an eighth power component located at a lower bridge arm of a fourth bridge arm in the high frequency bridge arm; and in case that the first target power component is the second power component or the third power component, the first group of paired diodes includes a sixth power component located at a lower bridge arm of the third bridge arm in the high frequency bridge arm and a seventh power component located at an upper bridge arm of the fourth bridge arm in the high-frequency bridge arm.

Optionally, a cycle of the alternating current signal includes a positive half cycle and a negative half cycle, the converter also includes a power frequency bridge arm, the power frequency bridge arm includes a ninth power component and a tenth power component, the ninth power component is located at an upper bridge arm of the power frequency bridge arm, and the tenth power component is located at a lower bridge arm of the power frequency bridge arm. The control method further includes: controlling the tenth power component to be turned on and the ninth power component to be turned off in the positive half cycle; and controlling the tenth power component to be turned off and the ninth power component to be turned on in the negative half cycle.

Optionally, generating the reference carrier signal according to the current voltage value of the battery, the target voltage value of the battery and the alternating current signal when receiving the charging instruction includes: obtaining a target current value according to a difference value between the current voltage value of the battery and the target voltage value of the battery; obtaining a frequency control parameter according to the target current value and a current value of the alternating current signal, in which the frequency control parameter is configured to indicate a frequency of the reference carrier signal to be generated; and generating the reference carrier signal according to the frequency control parameter.

According to a second aspect of embodiments of the present invention, there is provided a control apparatus, including: a processor; and a memory for storing instructions executable by the processor. The processor is configured to execute the instructions to realize the steps of the control method of the converter according to the first aspect of embodiments of the present invention.

According to a third aspect of embodiments of the present invention, there is provided an on-board charger, including a converter and the control device according to the third aspect of embodiments of the present invention.

According to a fourth aspect of embodiments of the present invention, there is provided a vehicle, including a battery and the on-board charger according to the fourth aspect of embodiments of the present invention.

According to a fifth aspect of embodiments of the present invention, there is provided a computer-readable storage medium, on which computer program instructions are stored, and when the computer program instructions are executed by a processor, the steps of the control method of the converter according to the first aspect of embodiments of the present invention are realized.

According to a sixth aspect of embodiments of the present invention, there is provided a computer program product, including a computer program, and when the computer program is executed by a processor, the steps of the control method of the converter according to the first aspect of embodiments of the present invention are realized.

By adopting the above technical solution, the first type of driving signal for controlling the rectification circuit unit is generated at least according to the reference carrier signal, the first type of driving signal is at least used for controlling the target power component in the rectification circuit unit to be in the normally off state, and the operation of the rectification circuit unit is controlled by using the first type of driving signal. In this way, in the charging stage, the problem of poor charging efficiency caused by the reverse flow of the quantity of electricity in the battery to the converter can be avoided, thus improving the reliability of the converter.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention, and serve to explain the principles of the present invention together with the description.
FIG. 1 is a schematic diagram of an application scenario according to an illustrative embodiment.
FIG. 2 is a block diagram of a converter according to an illustrative embodiment.
FIG. 3 is a flow chart of a control method of a converter according to an illustrative embodiment.
FIG. 4 is a schematic diagram of generating a reference carrier signal according to an illustrative embodiment.
FIG. 5 is a circuit diagram of a converter according to an illustrative embodiment.
FIG. 6 is a schematic diagram of generating a first driving signal according to an illustrative embodiment.
FIG. 7 is a schematic diagram of generating a second driving signal according to an illustrative embodiment.
FIG. 8 is a schematic diagram of generating a second type of driving signal according to an illustrative embodiment.
FIG. 9 is a schematic diagram of a driving signal according to an illustrative embodiment.
FIG. 10 is a block diagram of a control device of a converter according to an illustrative embodiment.
FIG. 11 is a block diagram of a vehicle according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. Embodiments described in the following illustrative embodiments and the implementations described in some embodiments of the invention do not represent all possible embodiments consistent with the present invention. Rather, they are merely examples of devices and methods consistent with some aspects of the present invention as detailed in the appended claims.

It should be noted that all actions of acquiring signals, information or data in the present invention are carried out under the premise of complying with the corresponding data protection laws and policies of the country where it is located and obtaining authorization from the owner of the corresponding device.

At present, in a working process of an AC-DC converter of a single-stage structure, for example, in a charging stage, the quantity of electricity in a battery may flow back to the converter, resulting in poor charging efficiency and poor reliability of the converter.

In view of this, the present invention provides a control method and a control device of a converter, a related apparatus, a medium and a product, which generate a first type of driving signal for controlling a rectification circuit unit at least according to a reference carrier signal. The first type of driving signal is at least used for controlling a target power component in the rectification circuit unit to be in a normally off state, and the first type of driving signal is used to control the rectification circuit unit to operate. In this way, in the charging stage, the problem of poor charging efficiency caused by the reverse flow of the quantity of electricity in the battery to the converter can be avoided, thus improving the reliability of the converter.

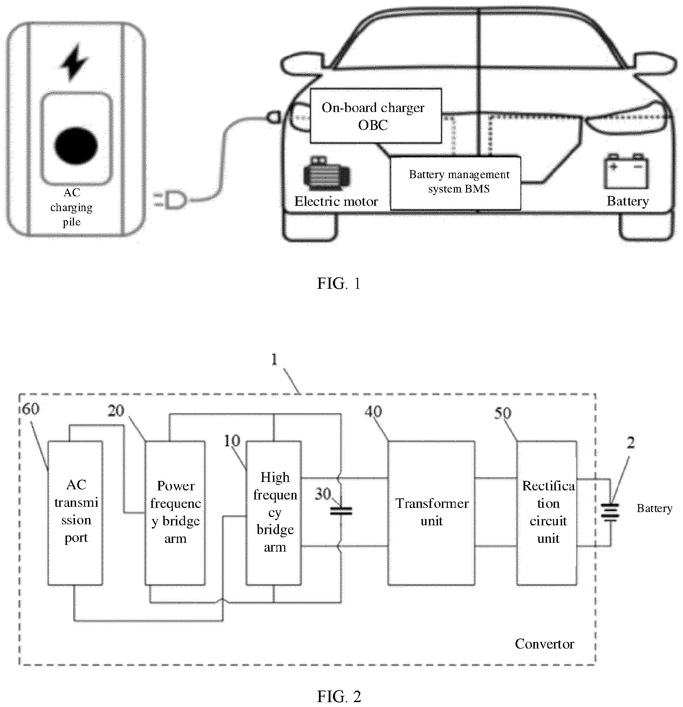

FIG. 1 is a schematic diagram of an application scenario according to an illustrative embodiment. As shown in FIG. 1, an on-board charger (OBC) is arranged in a vehicle, and the on-board charger (OBC) includes an AC-DC converter of a single-stage structure. When charging is needed, a charging gun is inserted into an alternating current charging station. Then, the on-board charger (OBC) receives an alternating current charging instruction, and thus the on-board charger (OBC) charges a battery in the vehicle under the monitoring of a battery management system (BMS). For example, the on-board charger (OBC) converts an alternating current provided by the alternating current charging station into a direct current to charge the battery.

The converter will be described below.

In the present invention, the converter 1 is used to convert an input alternating current signal into a direct current signal to charge the battery, and the converter at least includes a rectification circuit unit. In addition, the converter can also include a high frequency bridge arm, a power frequency bridge arm, a filter capacitor and a transformer unit. FIG. 2 is a block diagram of a converter according to an illustrative embodiment. As shown in FIG. 2, the converter 1 is used to convert the input alternating current signal into the direct current signal to charge the battery 2. The converter 1 may include a high frequency bridge arm 10, a power frequency bridge arm 20, a filter capacitor 30, a transformer unit 40 and a rectification circuit unit 50. For example, the high frequency bridge arm 10 may be a full bridge circuit, and the power frequency bridge arm 20 may be a half bridge circuit. The high frequency bridge arm 10 and the power frequency bridge arm 20 can form a power factor correction (PFC) circuit unit. For example, the high frequency bridge arm and the power frequency bridge arm form a single-phase staggered totem pole PFC topology structure.

The filter capacitor 30 can be an electrolyte capacitor or a thin film capacitor.

In addition, as shown in FIG. 2, the converter 1 also includes an alternating current transmission port 60 connected to the high frequency bridge arm 10 and the power frequency bridge arm 20, respectively, for providing the alternating current signal to the high frequency bridge arm 10 and the power frequency bridge arm 20. The high frequency bridge arm 10, the power frequency bridge arm 20 and the filter capacitor 30 are connected in parallel. The transformer unit 40 is connected to the high frequency bridge arm 10 and the rectification circuit unit 50, respectively.

During the operation of the converter, any power component in the high frequency bridge arm 10, the power frequency bridge arm 20 and the rectification circuit unit 50 can be controlled. The specific control manner will be described in detail below.

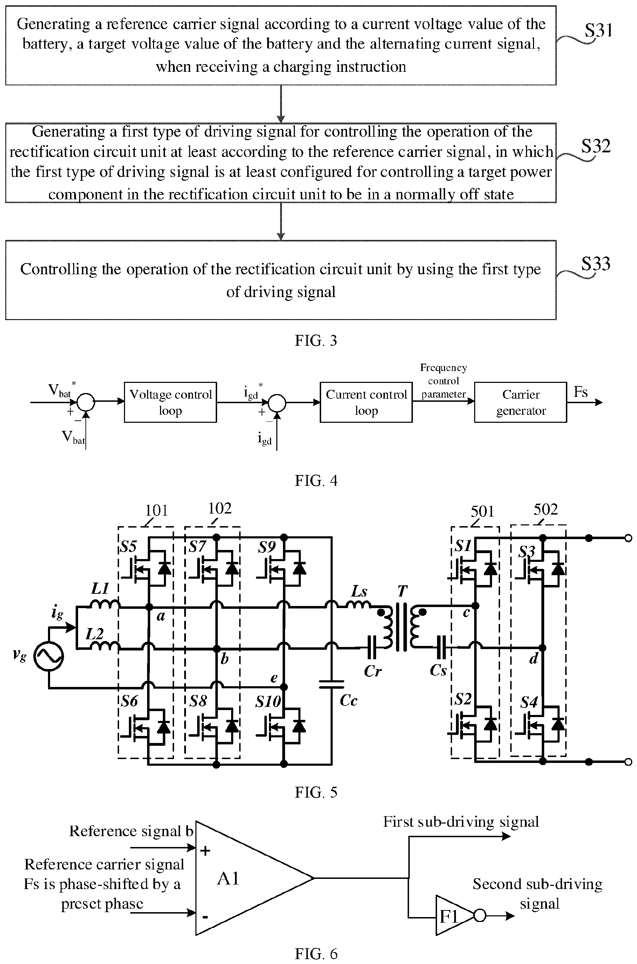

FIG. 3 is a flow chart of a control method of a converter according to an illustrative embodiment. As shown in FIG. 3, the control method may include the following steps.

In step S31, when receiving a charging instruction, a reference carrier signal is generated according to a current voltage value of a battery, a target voltage value of the battery and an alternating current signal.

In step S32, a first type of driving signal for controlling operation of a rectification circuit unit is generated at least according to the reference carrier signal, and the first type of driving signal is at least configured for controlling a target power component in the rectification circuit unit to be in a normally off state.

In the present invention, when the target power component is in the normally off state, a body diode corresponding to the target power component is in a freewheeling state.

In step S33, the operation of the rectification circuit unit is controlled by using the first type of driving signal.

By adopting the above technical solution, the first type of driving signal for controlling the rectification circuit unit is generated at least according to the reference carrier signal, the first type of driving signal is at least used for controlling the target power component in the rectification circuit unit to be in the normally off state, and the operation of the rectification circuit unit is controlled by using the first type of driving signal. In this way, in the charging stage, the problem of poor charging efficiency caused by the reverse flow of the quantity of electricity in the battery to the converter can be avoided, thus improving the reliability of the converter.

It should be understood that the target power component can also be controlled to be in a synchronous rectification state, so that the target power component can be controlled to be turned on while the body diode is in the freewheeling state, and thus the current can flow in a channel of the target power component, further reducing the power loss and further improving the efficiency. However, this manner cannot effectively prevent the problem of the reverse flow of the quantity of electricity in the battery to the converter. Therefore, a corresponding target power component can be controlled to be turned on or not according to the actual demand, when the body diode is in the freewheeling state.

Each step in FIG. 3 will be described in detail below.

In an embodiment, in step S31, generating the reference carrier signal according to the current voltage value of the battery, the target voltage value of the battery and the alternating current signal when receiving the charging instruction may include: obtaining a target current value according to a difference value between the current voltage value of the battery and the target voltage value of the battery; and obtaining a frequency control parameter according to the target current value and a current value of the alternating current signal, and the frequency control parameter being configured to indicate a frequency of the reference carrier signal to be generated; and generating the reference carrier signal according to the frequency control parameter.

For example, FIG. 4 is a schematic diagram of generating a reference carrier signal according to an illustrative embodiment. As shown in FIG. 4, first, a current voltage value V_{bat} and a target voltage value V_{bat}* of the battery are input into a voltage control loop to obtain a target current value i_{gd}* output by the voltage control loop. The target voltage value refers to a target value of battery charging, which can be obtained from the charging instruction. In addition, according to an alternating current signal i_{g} currently input by the alternating current transmission port and a current signal output after the alternating current signal i_{g} passing through the high frequency bridge arm and the power frequency bridge arm, a current following value i_{gd} corresponding to the alternating current signal i_{g} is obtained by using a rotation coordinate transformation from αβ alternating current components to dq direct current components. Then, a difference value between the target current value i_{gd}* and the current following value i_{gd} is input into the current control loop to obtain the frequency control parameter output by the current control loop. Finally, the frequency control parameter is input into a carrier generator, and the carrier generator generates and outputs a reference carrier signal Fs according to the frequency control parameter. The frequency of the reference carrier signal is a frequency corresponding to the frequency control parameter.

In order to facilitate a better description, the structure of the rectification circuit unit is first described in the following.

FIG. 5 is a circuit diagram of a converter according to an illustrative embodiment. As shown in FIG. 5, the rectification circuit unit 50 includes a first bridge arm 501 and a second bridge arm 502. The first bridge arm 501 includes a first power component *S1* and a second power component *S2,* and the second bridge arm 502 includes a third power component *S3* and a fourth power component *S4.* The first power component *S1* is located at an upper bridge arm of the first bridge arm 501, the second power component *S2* is located at a lower bridge arm of the first bridge arm 501. The third power component *S3* is located at an upper bridge arm of the second bridge arm 502, and the fourth power component *S4* is located at a lower bridge arm of the second bridge arm 502. Accordingly, the target power component in the normally off state may include the first power component *S1* and the third power component *S3* located at the upper bridge arms; or, the target power component in the normally off state may include the second power component *S2* and the fourth power component *S4* located at the lower bridge arms.

In addition, since the first power component *S1* and the third power component *S3* located at the upper bridge arms are respectively connected with a positive electrode of the battery, in order to further avoid the reverse flow of the quantity of electricity in the battery to the converter, preferably, the target power component may include the first power component *S1* and the third power component *S3* located at the upper bridge arms.

Accordingly, the first type of driving signal includes a second driving signal for controlling the target power component to be in the normally off state and a first driving signal for controlling the operation of other power components in the rectification circuit unit except the target power component in the rectification circuit unit. In Step S32, generating the first type of driving signal for controlling the operation of the rectification circuit unit at least according to the reference carrier signal may include generating the first driving signal for controlling the operation of the other power components in the rectification circuit unit except the target power component in the rectification circuit unit according to a duty ratio of the reference carrier signal and a preset driving signal.

In the present invention, the other power components in the rectification circuit unit except the target power component in the rectification circuit unit include a first target power component and a second target power component. For example, it is assumed that the target power component includes the first power component *S1* and the third power component *S3.* The first target power component may be the fourth power component *S4,* and the second target power component may be the second power component *S2.* Or, the first target power component may be the second power component *S2,* and the second target power component may be the fourth power component *S4.*

According to the duty ratio of the reference carrier signal and the preset driving signal, a specific implementation of generating the first driving signal for controlling the operation of the other power components in the rectification circuit unit except the target power component in the rectification circuit unit can be as follows. First, a reference signal is generated according to the duty ratio of the reference carrier signal and the preset driving signal, and an amplitude of the reference signal does not change with a phase of the alternating current signal. For example, a product of the duty ratio and a maximum amplitude of the reference carrier signal can be determined as the reference signal, and the reference signal is a fixed value and does not change with the change of the phase of the alternating current signal. For example, it is assumed that the duty ratio is 50%, and in case that the maximum amplitude of the reference carrier signal is 1, the reference signal is denoted as y=0.5. In case that the maximum amplitude of the reference carrier signal is 100, the reference signal is denoted as y=50.

It should be understood that the duty ratio can be other values, but when the duty ratio is 50%, the energy transmitted by the converter is the largest, that is, the voltage utilization rate of the converter is the highest.

Then, the reference signal is input into a positive input end of a first comparator, and the reference carrier signal is phase-shifted by a preset phase and then input into a negative input end of the first comparator, to obtain a first sub-driving signal output by the first comparator and configured to control the operation of the first target power component.

The preset phase is determined according to the phase of the alternating current signal. For example, the preset phase has a linear functional relationship with the phase of the alternating current signal, and the specific functional relationship can be calibrated in advance through experiments. The preset phase can range from 0 to 0.5 rad.

Then, the first sub-driving signal is input into a first inverter to obtain a second sub-driving signal output by the first inverter and configured to control the operation of the second target power component.

FIG. 6 is a schematic diagram of generating a first driving signal according to an illustrative embodiment. As shown in FIG. 6, a reference signal b is input into a positive input end of a first comparator A1, and the reference carrier signal Fs is phase-shifted by a preset phase and then input into a negative input end of the first comparator A1, to obtain a first sub-driving signal output by the first comparator A1 and configured to control the operation of the first target power component. In addition, an output end of the first comparator A1 is connected to a first inverter F1, that is, the first sub-driving signal is input into the first inverter F1 to obtain a second sub-driving signal output by the first inverter F 1 and configured to control the operation of the second target power component.

In addition, in step S32, generating the first type of driving signal for controlling the operation of the rectification circuit unit at least according to the reference carrier signal may further include inputting a preset signal into a positive input end of a second comparator and inputting the reference carrier signal into a negative input end of the second comparator, to obtain a second driving signal output by the second comparator, and controlling the target power component to be in the normally off state by using the second driving signal.

The preset signal can be a signal with an amplitude of 0, or any signal with an amplitude that is not 0, but at each moment is smaller than the amplitude of the reference carrier signal at that moment, which is not specifically limited in the present invention.

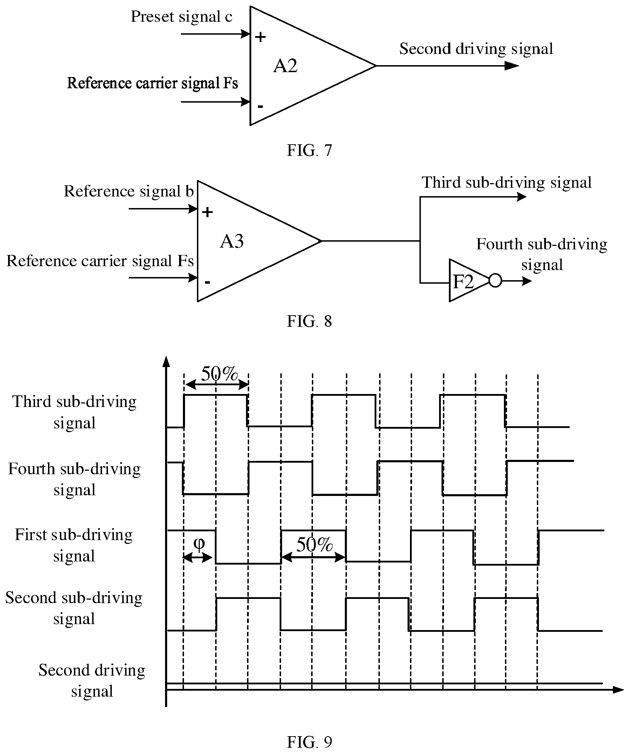

FIG. 7 is a schematic diagram of generating a second driving signal according to an illustrative embodiment. As shown in FIG. 7, a preset signal c is input into a positive input end of a second comparator A2, and a reference carrier signal Fs is input into a negative input end of the second comparator A2, to obtain a second driving signal output by the second comparator A2. The second driving signal has a low level of 0 and is configured for controlling the target power component to be in the normally off state.

The control method of the converter according to the present invention can also control the high frequency bridge arm included in the converter. In an embodiment, the control method may further include generating a second type of driving signal for controlling the operation of the high frequency bridge arm according to the reference carrier signal and the reference signal. There is a phase delay between the second type of driving signal and the first driving signal, and the delayed phase is the above preset phase. For example, the first driving signal is delayed by the preset phase behind the second type of driving signal.

As shown in FIG. 5, the high frequency bridge arm 10 includes a third bridge arm 101 and a fourth bridge arm 102, and the third bridge arm 101 includes a fifth power component *S5* and a sixth power component *S6,* and the fourth bridge arm 102 includes a seventh power component *S7* and an eighth power component *S8.* The fifth power component *S5* and the eighth power component *S8* form a group of paired diodes, and the sixth power component *S6* and the seventh power component *S7* form a group of paired diodes.

In this embodiment, the second type of driving signal includes a third sub-driving signal for controlling operation of a first group of paired diodes and a fourth sub-driving signal for controlling operation of a second group of paired diodes. According to the reference carrier signal and the reference signal, the specific implementation of generating the second type of driving signal for controlling the operation of the high frequency bridge arm is as follows. The reference carrier signal is input into a negative input end of a third comparator, and the reference signal is input into a positive input end of the third comparator, to obtain the third sub-driving signal output by the third comparator and configured to control the operation of the first group of paired diodes. The third sub-driving signal is input into a second inverter to obtain the fourth sub-driving signal output by the second inverter and configured to control the operation of the second group of paired diodes.

In case that the first target power component is the first power component or the fourth power component, the first group of paired diodes includes the fifth power component located at an upper bridge arm of the third bridge arm in the high frequency bridge arm and the eighth power component located at a lower bridge arm of the fourth bridge arm in the high frequency bridge arm. In case that the first target power component is the second power component or the third power component, the first group of paired diodes includes the sixth power component located at a lower bridge arm of the third bridge arm in the high frequency bridge arm and the seventh power component located at an upper bridge arm of the fourth bridge arm in the high frequency bridge arm.

FIG. 8 is a schematic diagram of generating a second type of driving signal according to an illustrative embodiment. As shown in FIG. 8, the reference carrier signal Fs is input into a negative input end of a third comparator A3, and the reference signal B is input into a positive input end of the third comparator A3, to obtain the third sub-driving signal output by the third comparator A3 and configured to control the operation of the first group of paired diodes. In addition, the output end of the third comparator A3 is connected to the input end of the second inverter F2, that is, the third sub-driving signal is input into the second inverter F2 to obtain the fourth sub-driving signal output by the second inverter F2 and configured to control the operation of the second group of paired diodes.

In a possible way, it is assumed that the target power components in the normally off state are the second power component *S2* and the fourth power component *S4,* and in case that the first target power component is the first power component *S1,* the first group of paired diodes includes the fifth power component *S5* and the eighth power component *S8,* and the second group of paired diodes includes the sixth power component *S6* and the seventh power component *S7*; and in case that the first target power component is the third power component *S3,* the first group of paired diodes includes the sixth power component *S6* and the seventh power component S7, and the second group of paired diodes includes the fifth power component *S5* and the eighth power component *S8.*

In another possible way, it is assumed that the target power components in the normally off state are the first power component *S1* and the third power component *S3,* and in case that the first target power component is the fourth power component *S4,* the first group of paired diodes includes the fifth power component *S5* and the eighth power component *S8,* and the second group of paired diodes includes the sixth power component *S6* and the seventh power component *S7*; and in case that the first target power component is the second power component *S2,* the first group of paired diodes includes the sixth power component *S6* and the seventh power component *S7,* and the second group of paired diodes includes the fifth power component *S5* and the eighth power component *S8.*

FIG. 9 is a schematic diagram of a driving signal according to an illustrative embodiment. As shown in FIG. 9, the first sub-driving signal output by the first comparator A1 and the third sub-driving signal output by the third comparator A3 have a delay of a preset phase φ, and the second sub-driving signal output by the first inverter F 1 and the fourth sub-driving signal output by the second inverter F2 have a delay of a preset phase φ. That is, the power components corresponding to the primary and secondary sides of the transformer unit 40 are not turned on at the same time, and there is a certain phase delay. For example, it is assumed that the target power components in the normally off state are the first power component *S1* and the third power component *S3,* the fifth power component *S5* and the eighth power component *S8* on the primary side of the transformer unit 40 and the fourth power component *S4* on the secondary side of the transformer unit 40 are not turned on at the same time, and there is a certain phase delay.

As shown in FIG. 9, the duty ratios of the first sub-driving signal to the fourth sub-driving signal are all 50%.

For example, in FIG. 5, the transformer unit 40 includes a resonant inductor *Ls,* a transformer primary-side resonant capacitor *Cr,* a transformer secondary-side resonant capacitor *Cs* and a transformer *T.* One end of the resonant inductor *Ls* is connected to a midpoint *a* of the third bridge arm 101 in the high frequency bridge arm 10, the other end of the resonant inductor *Ls* is connected to a midpoint *b* of the fourth bridge arm 102 in the high frequency bridge arm 10 via the primary side of the transformer *T* and the transformer primary-side resonant capacitor *Cr,* one end of the secondary side of the transformer *T* is connected to a midpoint *c* of the first bridge arm 501 in the rectification circuit unit 50, and the other end of the secondary side of the transformer *T* is connected to a midpoint *d* of the second bridge arm 502 in the rectification circuit unit 50 via the transformer secondary-side resonant capacitor Cs.

In combination with the converter shown in FIG. 5, it is assumed that the first power component *S1* and the third power component *S3* are in the normally off state, and the high frequency bridge arm operates under the drive of the second type of driving signal, to store the alternating current grid power in the transformer unit 40. Then, after the delay of the preset phase, when the fourth power component *S4* is turned on and the second power component *S2* is turned off, the resonant electric energy is stored in the transformer unit 40. Moreover, when the second power component *S2* is turned on and the fourth power component *S4* is turned off, the negative electrode of the battery is connected with one end of the secondary side of the transformer *T* via the second power component *S2* and the midpoint *c,* and the other end of the secondary side of the transformer *T* is connected with the positive electrode of the battery via the midpoint *d* and the body diode of the fourth power component *S4,* so as to charge the battery by using the alternating current grid power and the resonant electric energy stored in the transformer unit 40. In this way, the gain of the output voltage of the converter is improved, and the charging efficiency is further improved.

By adopting the above technical solution, the target power component in the rectification circuit unit is in the normally off state, other power components in the rectification circuit unit are in a modulation state, and the driving signal used for modulating the other power components in the rectification circuit unit has a phase delay with the driving signal used when modulating the primary-side power component of the transformer unit, so as to prevent the reverse flow of the battery energy, thus improving the reliability of the converter, while improving the gain of the output voltage and the charging efficiency.

In addition, the power frequency bridge arm can also be controlled. For example, as shown in FIG. 5, the converter further includes the power frequency bridge arm 20, and the power frequency bridge arm 20 includes a ninth power component *S9* and a tenth power component *S10,* the ninth power component *S9* is located at an upper bridge arm of the power frequency bridge arm 20 and the tenth power component *S10* is located at a lower bridge arm of the power frequency bridge arm 20. In the present invention, the ninth power component *S9* and the tenth power component *S10* may be controlled according to the alternating current signal.

For example, a cycle of the alternating current signal includes a positive half cycle and a negative half cycle. In the positive half cycle, the tenth power component *S10* is controlled to be turned on and the ninth power component *S9* is controlled to be turned off; and in the negative half cycle, the tenth power component *S10* is controlled to be turned off and the ninth power component *S9* is controlled to be turned on.

In addition, in FIG. 5, the alternating current transmission port 60 may include an alternating current power supply *v_{g}* and a booster inductor, the booster inductor may include two independent inductors denoted as *L1* and *L2,* one ends of the inductors *L1* and *L2* are both connected with a positive terminal of the alternating current power supply *v_{g}*, and the other ends of the inductors *L1* and *L2* are respectively connected with the midpoint *c* of the first bridge arm 501 and the midpoint *d* of the second bridge arm 502. A negative terminal of the alternating current power supply *v_{g}* is connected to a midpoint *e* of the power frequency bridge arm 20. The third bridge arm, the fourth bridge arm and the power frequency bridge arm form a single-phase staggered totem pole PFC topology structure, which can improve the conversion efficiency, reduce the current ripple of the input alternating current and improve the quality of the input alternating current.

It should be understood that the above description is only for the control method of the converter in a charging mode. In practical application, the converter shown in FIG. 5 can also work in an inversion mode. When the converter operates in the charging mode, the range of the delayed preset phase of the driving signals on the primary and secondary sides of the transformer is from 0 to 0.5, the output electric signal pulsates at twice the frequency of the alternating current, and the delayed preset phase reaches the maximum at the voltage zero crossing point of the alternating current signal. When the converter operates in the inversion mode, the range of the delayed preset phase of the driving signals on the primary and secondary sides of the transformer is from -0.15 to 0, the output electric signal pulsates at twice the frequency of the alternating current, and the delayed preset phase reaches the maximum at the peak of the alternating current signal. Therefore, in both the charging mode and the inversion mode, the gain of the voltage can be improved in the whole cycle of the alternating current signal.

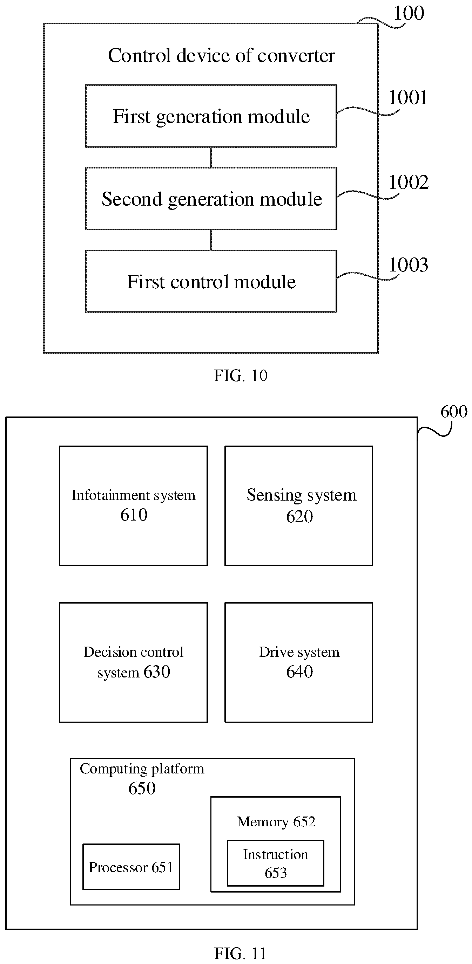

Based on the same inventive concept, the present invention also provides a control device of the converter. FIG. 10 is a block diagram of a control device of a converter according to an illustrative embodiment. The converter is used for converting an input alternating current signal into a direct current signal to charge a battery, and the converter includes a rectification circuit unit. As shown in FIG. 10, the control device 100 of the converter may include: a first generation module 1001 configured to generate a reference carrier signal according to a current voltage value of the battery, a target voltage value of the battery and the alternating current signal, when receiving a charging instruction; a second generation module 1002 configured to generate a first type of driving signal for controlling the operation of the rectification circuit unit at least according to the reference carrier signal, in which the first type of driving signal is at least configured for controlling a target power component of the rectification circuit unit to be in a normally off state; and a first control module 1003 configured to control the operation of the rectification circuit unit by using the first type of driving signal.

In some embodiments, the rectification circuit unit includes a first bridge arm and a second bridge arm, the first bridge arm includes a first power component and a second power component, the second bridge arm includes a third power component and a fourth power component, the first power component is located at an upper bridge arm of the first bridge arm, the second power component is located at a lower bridge arm of the first bridge arm, the third power component is located at an upper bridge arm of the second bridge arm, and the fourth power component is located at a lower bridge arm of the second bridge arm.

The target power component includes the first power component and the third power component; or, the target power component includes the second power component and the fourth power component.

In some embodiments, the first type of driving signal includes a second driving signal for controlling the target power component to be in the normally off state and a first driving signal for controlling the operation of other power components in the rectification circuit unit except the target power component in the rectification circuit unit. The second generation module 1002 may include a first generation submodule configured to generate the first driving signal for controlling the operation of other power components in the rectification circuit unit except the target power component in the rectification circuit unit according to a duty ratio of the reference carrier signal and a preset driving signal.

In some embodiments, the other power components in the rectification circuit unit except the target power component in the rectification circuit unit include a first target power component and a second target power component.

The first generation submodule is configured to generate a reference signal according to the duty ratio of the reference carrier signal and the preset driving signal, and an amplitude of the reference signal does not change with a phase of the alternating current signal.

The reference signal is input into a positive input end of a first comparator, and the reference carrier signal is input into a negative input end of the first comparator after being phase-shifted by a preset phase, to obtain a first sub-driving signal output by the first comparator and configured to control the operation of the first target power component.

The first sub-driving signal is input into a first inverter to obtain a second sub-driving signal output by the first inverter and configured to control the operation of the second target power component.

In some embodiments, the second generation module 1002 may further include a second generation submodule configured to input a preset signal into a positive input end of a second comparator and input the reference carrier signal into a negative input end of the second comparator, to obtain the second driving signal output by the second comparator, and the second driving signal is used for controlling the target power component to be in the normally off state.

In some embodiments, the converter includes a high frequency bridge arm, and the control device 100 of the converter may further include: a third generation module configured to generate a second type of driving signal for controlling the operation of the high frequency bridge arm according to the reference carrier signal and the reference signal, and the first driving signal is delayed by a preset phase behind the second type of driving signal; and a second control module configured to control the operation of the high frequency bridge arm by using the second type of driving signal.

In some embodiments, the high frequency bridge arm includes a first group of paired diodes and a second group of paired diodes, and the second type of driving signal includes a third sub-driving signal for controlling the operation of the first group of paired diodes, and a fourth sub-driving signal for controlling the operation of the second group of paired diodes. The third generation module is configured to: input the reference carrier signal into a negative input end of a third comparator, and input the reference signal into a positive input end of the third comparator, to obtain the third sub-driving signal output by the third comparator and configured to control the operation of the first group of paired diodes; and input the third sub-driving signal into a second inverter to obtain the fourth sub-driving signal output by the second inverter and configured to control the operation of the second group of paired diodes.

In case that the first target power component is the first power component or the fourth power component, the first group of paired diodes includes a fifth power component located at an upper bridge arm of the third bridge arm in the high frequency bridge arm and an eighth power component located at a lower bridge arm of the fourth bridge arm in the high frequency bridge arm. In case that the first target power component is the second power component or the third power component, the first group of paired diodes includes a sixth power component located at a lower bridge arm of the third bridge arm in the high frequency bridge arm and a seventh power component located at an upper bridge arm of the fourth bridge arm in the high frequency bridge arm.

In some embodiments, a cycle of the alternating current signal includes a positive half cycle and a negative half cycle. The converter also includes a power frequency bridge arm, the power frequency bridge arm includes a ninth power component and a tenth power component, the ninth power component is located at an upper bridge arm of the power frequency bridge arm, and the tenth power component is located at a lower bridge arm of the power frequency bridge arm. The control device 100 of the converter may further include: a third control module configured to control the tenth power component to be turned on and the ninth power component to be turned off in the positive half cycle; and a fourth control module configured to control the tenth power component to be turned off and the ninth power component to be turned on in the negative half cycle.

Regarding the device in the above embodiments, the specific way in which each module performs the operation has been described in detail in embodiments of the method, and will not be described in detail here.

The present invention also provides a computer-readable storage medium, on which computer program instructions are stored, and when the computer program instructions are executed by a processor, the steps of the control method of the converter provided by the present invention are realized.

Based on the same inventive concept, the present invention also provides a control apparatus, including: a processor; and a memory configured for storing instructions executable by the processor. The processor is configured to execute the instructions to realize the steps of the control method of the converter provided by the present invention.

For example, the control device may be a controller.

Based on the same inventive concept, the present invention also provides an on-board charger, including a converter and a control apparatus provided by the present invention.

Based on the same inventive concept, the present invention also provides a vehicle including a battery and an on-board charger provided by the present invention, and the on-board charger charges the battery.

FIG. 11 is a block diagram of a vehicle according to an illustrative embodiment. For example, a vehicle 600 may be a hybrid vehicle, a non-hybrid vehicle, an electric vehicle, a fuel cell vehicle or other types of vehicles. The vehicle 600 may be an autonomous vehicle, a semi-autonomous vehicle or a non-autonomous vehicle.

Referring to FIG. 11, the vehicle 600 may include various subsystems, such as an infotainment system 610, a sensing system 620, a decision control system 630, a drive system 640, and a computing platform 650. The vehicle 600 can also include more or less subsystems, and each subsystem can include a plurality of components. In addition, the respective subsystems and the respective components of the vehicle 600 can be interconnected in a wired or wireless manner. In addition, the vehicle 600 may also include an on-board charger.

In some embodiments, the infotainment system 610 may include a communication system, an entertainment system, a navigation system and the like.

The sensing system 620 may include several sensors for sensing information of the environment around the vehicle 600. For example, the sensing system 620 may include a global positioning system (the global positioning system may be a GPS system, a Beidou system or other positioning systems), an inertial measurement unit (IMU), a laser radar, a millimeter-wave radar, an ultrasonic radar and a camera.

The decision control system 630 may include a computing system, a vehicle controller, a steering system, an accelerator and a braking system.

The drive system 640 may include components that provide power for the vehicle 600 to move. In an embodiment, the drive system 640 may include an engine, an energy source, a transmission system and wheels. The engine may be one or a combination of an internal combustion engine, an electric motor and an air compression engine. The engine can convert the energy provided by the energy source into the mechanical energy.

Some or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may also include, for example, a graphic process unit (GPU), a field programmable gate array (FPGA), a system on chip (SOC), an application specific integrated circuit (ASIC) or a combination thereof.

The memory 652 can be realized by any type of volatile or non-volatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 can also store data, such as a road map, route information, a position, a direction and a speed of the vehicle and other data. The data stored in the memory 652 can be used by the computing platform 650.

In the embodiments of the present invention, the processor 651 can execute the instructions 653 to complete all or part of the steps of the control method of the converter described above.

In another illustrative embodiment, a computer program product is also provided, which includes a computer program executable by a programmable device, and the computer program has a code portion for executing the control method of the converter described above when executed by the programmable device.

Furthermore, the word "illustrative" is used herein to mean serving as an example, an instance and a diagram. Any aspect or design described herein as "illustrative" is not necessarily to be understood as advantageous over other aspects or designs. On the contrary, the use of the word "illustrative" is intended to present concepts in a concrete way. As used herein, the term "or" is intended to mean an inclusive "or" rather than an exclusive "or". That is, unless otherwise specified or clear from the context, "X uses A or B" is intended to mean any one of the natural inclusive arrangements. That is, if X uses A, X uses B, or X uses both A and B, then "X uses A or B" is satisfied in any of the foregoing examples. In addition, the articles "a" and "an" as used in the present invention and the appended claims are generally understood to mean "one or more" unless otherwise specified or clearly pointed to the singular form from the context.

Likewise, although the present invention has been shown and described with respect to one or more implementations, equivalent variations and modifications will occur to those skilled in the art after reading and understanding the specification and drawings. The present invention includes all such modifications and variations, and is limited only by the scope of the claims. With particular reference to various functions performed by the above components (e.g., elements, resources, etc.), unless otherwise indicated, the terms used to describe such components are intended to correspond to any component that performs the specific function of the described component (that is, functionally equivalent), even if it is not structurally equivalent to the disclosed structure. In addition, although the particular feature of the present invention may have been disclosed with respect to only one of several implementations, such feature may be combined with one or more other features of other implementations, as may be desirable and advantageous to any given or particular application. Furthermore, such terms "include", "possess", "have", "with" or variations thereof used in the detailed description or claims are intended to be inclusive in a manner similar to the term "comprise".

Other embodiments of the present invention will easily occur to those skilled in the art after considering the specification and practicing the present invention disclosed herein. The present invention is intended to cover any variations, usages or adaptations of the present invention, which follow the general principles of the present invention and include the common sense or common technical means in the art that are not disclosed in the present invention.

It should be understood that the present invention is not limited to the precise structure described above and shown in the drawings, and various modifications and changes can be made without departing from its scope. The scope of the present invention is limited only by the appended claims.

It should be understood that features of various embodiments of the present invention described herein may be combined with each other, unless otherwise specified. As used herein, the term "and/or" includes any one of the related listed items and any combination of any two or more of the related listed items. Similarly, "at least one of ..." includes any one of the related listed items and any combination of any two or more of the related listed items.

Although terms such as "first", "second" and "third" may be used herein to describe various members, components, regions, layers or sections, these members, components, regions, layers or sections are not limited by these terms. On the contrary, these terms are only used to distinguish one member, component, region, layer or section from another member, component, region, layer or section. Therefore, the first member, component, region, layer or section mentioned in the examples described herein can also be called the second member, component, region, layer or section without departing from the teaching of each example. In addition, the terms "first" and "second" are only used for purpose of description, and cannot be understood as indicating or implying relative importance or implicitly indicating the number of indicated technical features. Therefore, the features defined as "first" and "second" can explicitly or implicitly include at least one such feature. In the description herein, "a plurality of" means at least two, such as two, three, etc., unless otherwise specifically defined.

## Claims

1. A control method of a converter, wherein the converter is configured to convert an input alternating current signal into a direct current signal to charge a battery, the converter comprises a rectification circuit unit, and the control method comprises:
generating (S31) a reference carrier signal according to a current voltage value of the battery, a target voltage value of the battery and the alternating current signal, when receiving a charging instruction;
generating (S32) a first type of driving signal for controlling the operation of the rectification circuit unit at least according to the reference carrier signal, wherein the first type of driving signal is at least configured to control a target power component in the rectification circuit unit to be in a normally off state; and
controlling (S33) the operation of the rectification circuit unit by using the first type of driving signal.

2. The control method according to claim 1, wherein the rectification circuit unit comprises a first bridge arm and a second bridge arm, the first bridge arm comprises a first power component and a second power component, the second bridge arm comprises a third power component and a fourth power component, the first power component is at an upper bridge arm of the first bridge arm, the second power component is at a lower bridge arm of the first bridge arm, the third power component is at an upper bridge arm of the second bridge arm, and the fourth power component is at a lower bridge arm of the second bridge arm; and
the target power component comprises the first power component and the third power component; or the target power component comprises the second power component and the fourth power component.

3. The control method according to claim 2, wherein the first type of driving signal comprises a second driving signal for controlling the target power component to be in the normally off state and a first driving signal for controlling the operation of other power components in the rectification circuit unit except the target power component in the rectification circuit unit; and
generating (S32) the first type of driving signal for controlling the operation of the rectification circuit unit at least according to the reference carrier signal comprises:
generating the first driving signal for controlling the operation of other power components in the rectification circuit unit except the target power component in the rectification circuit unit according to a duty ratio of the reference carrier signal and a preset driving signal.

4. The control method according to claim 3, wherein the other power components in the rectification circuit unit except the target power component in the rectification circuit unit comprise a first target power component and a second target power component; and
generating the first driving signal for controlling the operation of other power components in the rectification circuit unit except the target power component in the rectification circuit unit according to the duty ratio of the reference carrier signal and the preset driving signal comprises:
generating a reference signal according to the duty ratio of the reference carrier signal and the preset driving signal, wherein an amplitude of the reference signal does not change with a phase of the alternating current signal;
inputting the reference signal into a positive input end of a first comparator, inputting the reference carrier signal into a negative input end of the first comparator after phase-shifting the reference carrier signal by a preset phase, and obtaining a first sub-driving signal for controlling the operation of the first target power component output by the first comparator; and
inputting the first sub-driving signal into a first inverter and obtaining a second sub-driving signal for controlling the operation of the second target power component output by the first inverter.

5. The control method according to claim 3 or 4, wherein generating (S32) the first type of driving signal for controlling the operation of the rectification circuit unit at least according to the reference carrier signal further comprises:
inputting a preset signal into a positive input end of a second comparator, inputting the reference carrier signal into a negative input end of the second comparator, and obtaining the second driving signal output by the second comparator, wherein the second driving signal is for controlling the target power component to be in the normally off state.

6. The control method according to claim 4 or 5, wherein the converter comprises a high frequency bridge arm, and the control method further comprises:
according to the reference carrier signal and the reference signal, generating a second type of driving signal for controlling the operation of the high frequency bridge arm, wherein the first driving signal is delayed by a preset phase behind the second type of driving signal; and
controlling the operation of the high frequency bridge arm by using the second type of driving signal.

7. The control method according to claim 6, wherein the high frequency bridge arm comprises a first group of paired diodes and a second group of paired diodes, and the second type of driving signal comprises a third sub-driving signal for controlling the operation of the first group of paired diodes and a fourth sub-driving signal for controlling the operation of the second group of paired diodes; and
generating the second type of driving signal for controlling the operation of the high frequency bridge arm according to the reference carrier signal and the reference signal comprises:
inputting the reference carrier signal into a negative input end of a third comparator, inputting the reference signal into a positive input end of the third comparator, and obtaining the third sub-driving signal for controlling the operation of the first group of paired diodes output by the third comparator; and
inputting the third sub-driving signal into a second inverter and obtaining the fourth sub-driving signal for controlling the operation of the second group of paired diodes output by the second inverter,
wherein in case that the first target power component is the first power component or the fourth power component, the first group of paired diodes comprises a fifth power component at an upper bridge arm of a third bridge arm in the high frequency bridge arm and an eighth power component at a lower bridge arm of a fourth bridge arm in the high frequency bridge arm; and in case that the first target power component is the second power component or the third power component, the first group of paired diodes comprises a sixth power component at a lower bridge arm of the third bridge arm in the high frequency bridge arm and a seventh power component at an upper bridge arm of the fourth bridge arm in the high frequency bridge arm.

8. The control method according to any one of claims 1-7, wherein a cycle of the alternating current signal comprises a positive half cycle and a negative half cycle, the converter also comprises a power frequency bridge arm, the power frequency bridge arm comprises a ninth power component and a tenth power component, the ninth power component is at an upper bridge arm of the power frequency bridge arm, the tenth power component is at a lower bridge arm of the power frequency bridge arm, and the control method further comprises:
controlling the tenth power component to be turned on and the ninth power component to be turned off in the positive half cycle; and
controlling the tenth power component to be turned off and the ninth power component to be turned on in the negative half cycle.

9. The control method according to any one of claims 1-8, wherein generating (S31) the reference carrier signal according to the current voltage value of the battery, the target voltage value of the battery and the alternating current signal when receiving the charging instruction comprises:
obtaining a target current value according to a difference value between the current voltage value of the battery and the target voltage value of the battery;
obtaining a frequency control parameter according to the target current value and a current value of the alternating current signal, wherein the frequency control parameter is configured to indicate a frequency of the reference carrier signal to be generated; and
generating the reference carrier signal according to the frequency control parameter.

10. A control apparatus comprising:
a processor; and
a memory for storing instructions executable by the processor,
wherein the processor is configured to execute the instructions to realize the steps of a control method of a converter according to any one of claims 1-9.

11. An on-board charger comprising a converter and a control apparatus according to claim 10.

12. A vehicle (600), comprising a battery and an on-board charger according to claim 11.

13. A computer-readable storage medium, storing computer program instructions thereon, wherein when the computer program instructions are executed by a processor, the steps of a control method according to any one of claims 1-9 are realized.

14. A computer program product, comprising a computer program, wherein when the computer program is executed by a processor, the steps of a control method according to any one of claims 1-9 are realized.
